# FASCICULE DE BREVET EUROPEEN

(11) **EP 2 721 444 B1**
(45) Date de publication et mention de la délivrance du brevet: **19.12.2018**
(21) Numéro de dépôt: 12730854.2
(22) Date de dépôt: 15.06.2012
(51) Int. Cl.: G06F 3/0481, G06F 3/0488, G06F 3/01, H04N 13/156, G02B 27/22

(54) **SYSTÈME DE COLOCALISATION D'UN ÉCRAN TACTILE ET D'UN OBJET VIRTUEL ET DISPOSITIF POUR LA MANIPULATION D'OBJETS VIRTUELS METTANT EN UVRE UN TEL SYSTÈME**
SYSTEM ZUR POSITIONIERUNG EINES BERÜHRUNGSBILDSCHIRMS UND EINES VIRTUELLEN OBJEKTS SOWIE VORRICHTUNG ZUR MANIPULATION VON VIRTUELLEN OBJEKTEN MIT EINEM SOLCHEN SYSTEM
SYSTEM FOR COLOCATING A TOUCH SCREEN AND A VIRTUAL OBJECT, AND DEVICE FOR MANIPULATING VIRTUAL OBJECTS IMPLEMENTING SUCH A SYSTEM

(30) Priorité: 17.06.2011 FR 1155341
(43) Date de publication de la demande: 23.04.2014
(73) Titulaire: INRIA - Institut National de Recherche en Informatique et en Automatique, 78153 Le Chesnay Cedex (FR); Immersion, 33100 Bordeaux (FR)
(72) Inventeur: DE LA RIVIERE, Jean-Baptiste, F-33000 Bordeaux (FR); CHARTIER, Christophe, F-33000 Bordeaux (FR); HACHET, Martin, F-33000 Bordeaux (FR); BOSSAVIT, Benoît, F-24520 Cours De Pile (FR); CASIEZ, Géry, F-59286 Roost Warendin (FR)
(74) Mandataire: Ipside
(86) Numéro de dépôt international: PCT/EP2012/061429
(87) Numéro de publication internationale: WO 2012/172044

(56) Documents cités:
- EP-A1- 2 214 092
- WO-A1-2011/044936
- US-A1- 2007 279 435
- US-A1- 2008 143 895
- US-A1- 2008 297 535
- US-A1- 2010 007 602
- MULDER J D: "Realistic occlusion effects in mirror-based co-located augmented reality systems", VIRTUAL REALITY, 2005. PROCEEDINGS. VR 2005. IEEE BONN, GERMANY MARCH 12-16, 2005, PISCATAWAY, NJ, USA,IEEE, PISCATAWAY, NJ, USA, 12 mars 2005 (2005-03-12), pages 203-208, XP031572879, ISBN: 978-0-7803-8929-8
- BENKO H ET AL: "Cross-dimensional gestural interaction techniques for hybrid immersive environments", VIRTUAL REALITY, 2005. PROCEEDINGS. VR 2005. IEEE BONN, GERMANY MARCH 12-16, 2005, PISCATAWAY, NJ, USA,IEEE, PISCATAWAY, NJ, USA, 12 mars 2005 (2005-03-12), pages 209-216, XP031572880, ISBN: 978-0-7803-8929-8
- Jason Leigh ET AL: "ImmersaDesk-4 : A High Resolution, High Visual Acuity Desktop Virtual Reality System", Electronic Visualization Laboratory, 11 novembre 2005 (2005-11-11), XP055019318, Extrait de l'Internet: URL:http://www.evl.uic.edu/cavern/rg/20050 415_leigh/ID4.7.pdf [extrait le 2012-02-14]
- MULDER J D ET AL: "A modular system for collaborative desktop VR/AR with a shared workspace", VIRTUAL REALITY, 2004. PROCEEDINGS. IEEE CHICAGO, IL, USA 27-31 MARCH 2004, PISCATAWAY, NJ, USA,IEEE, US, 27 mars 2004 (2004-03-27), pages 75-280, XP010769058, DOI: 10.1109/VR.2004.1310058 ISBN: 978-0-7803-8415-6

## Description

La présente invention appartient au domaine de la représentation d'objets virtuels et de leurs manipulations.

Plus particulièrement l'invention concerne un système pour visualiser un objet virtuel et un dispositif permettant à un opérateur de manipuler intuitivement au moins un objet virtuel de manière précise et sans que l'objet virtuel manipulé ne soit masqué par ses mains.

Dans le domaine des images virtuelles, de nombreuses solutions ont à ce jour été imaginées pour afficher ces images à un observateur et, le plus souvent dans le cas d'objets virtuels en représentation en trois dimensions (3D), pour réaliser une manipulation de ces objets virtuels notamment pour orienter ces objets virtuels dans l'espace.

Dans la présente description il sera utilisé l'expression "objet virtuel" pour désigner une représentation graphique d'un objet élaborée par un système de calculs. Un objet virtuel peut-être une représentation reproduisant l'image d'un objet réel ou correspondre à un objet imaginaire. L'expression "objet virtuel" pourra également désigner de façon générique un ensemble de tels objets virtuels élémentaires.

Il est possible de réaliser les différentes rotations et translations d'un objet virtuel à l'aide des moyens de commande conventionnels d'un ordinateur générant des images de l'objet virtuel, c'est-à-dire le clavier et des boutons de commande, des boules de poursuite ou des souris, mais ces moyens de commande, longtemps mis en oeuvre sur les stations de conception assistée par ordinateur, s'avèrent fastidieux à utiliser et manquent de souplesse pour un utilisateur non entraîné.

Pour une manipulation plus intuitive des objets virtuels, il a été fait appel à la prise en compte de mouvements des mains par l'intermédiaire de surfaces tactiles, autonomes ou placées sur des écrans, au travers desquelles par des traitements numériques appropriés un objet virtuel est manipulé dans l'espace virtuel, comme dans la solution présentée dans la publication de Jason Leigh et AL :"ImmersaDesk-4 : a high resolution, high visual acuity desktop virtual reality svstems" (Electronic Visualization Laboratory- 2005-11-11).

Ces solutions restent cependant très imparfaites car les mouvements des mains restent limités, notamment à la surface d'entrée 2D, et en conséquence peu représentatifs des mouvements qui seraient réalisés sur un objet physique. En outre dans le cas d'une surface tactile autonome il n'y a pas de corrélation visuelle entre les mouvements de l'objet et ceux des mains et dans le cas d'une surface tactile placée sur un écran sur lequel est représenté l'objet virtuel, les mains masquent l'objet affiché sur l'écran ne permettant pas une manipulation précise.

Pour améliorer les conditions de manipulation des objets virtuels, en utilisant un écran tactile, en s'affranchissant de ces contraintes il a été imaginé d'autres solutions comme par exemple les solutions de réalité virtuelle dites augmentées dans lesquelles des images, par exemple représentant les mains de l'utilisateur et leurs mouvements, issues d'une scène réelle sont insérées dans la scène de l'objet virtuel à manipuler, comme dans la solution présentée dans la publication de H. Benko et AL :"Cross-dimensional gestural interaction techniques for hybrid immersive environments" (IEEE 2005-03-12 pages 209-216). Dans ces cas il est nécessaire de détecter les mouvements des mains dans l'espace et lors de la manipulation l'utilisateur du dispositif ne voit pas ses mains lorsqu'il manipule l'objet virtuel mais doit se concentrer sur une représentation virtuelle de ses mains ce qui s'avère peu physiologique et nécessite des efforts d'adaptation de l'utilisateur.

Dans une forme améliorée d'un dispositif de réalité virtuelle augmentée, décrite dans la demande de brevet publiée sous le numéro FR 2947348, l'utilisateur observe son image dans une surface semi-transparente superposée à l'image de l'objet virtuel placé derrière la surface semi-transparente et qui apparaît dans le reflet d'un dispositif de manipulation tridimensionnel placé entre les mains de l'utilisateur. Ainsi l'utilisateur réalise des commandes de mouvements en relation directe avec la représentation de l'objet virtuel. Cependant ici encore l'utilisateur ne visualise pas directement ses mains mais seulement leurs reflets et les commandes des mouvements appliqués à l'objet virtuel restent relativement abstraites et arbitraires. Il est également connu qu'un opérateur regarde ses mains directement lors de la manipulation de moyens de contrôle d'une image virtuelle qui est vue simultanément par reflet dans une lame semi-transparente comme dans le cas des dispositifs mis en oeuvre dans les demandes de brevet US2007/279435 A1, US2008297535 A1, ou encore US2008143895 A1.

Dans la publication JD. Mulder :"Realistic occlusion effects in mirror-based colocated augmented systems" (IEEE 2005-03-12 pages 203-208) il est décrit un système de réalité virtuelle dont une structure support comporte un écran, un miroir semi-réfléchissant, permettant à un utilisateur du système de visualiser de manière simultanée et colocalisée une image virtuelle de l'écran vue par réflexion sur le miroir, et une zone située derrière le miroir par rapport à l'utilisateur, par transparence, dans laquelle les mains de l'utilisateur sont susceptibles d'interagir avec les objets virtuels affichés par l'écran, le opérateur visualise donc directement ses mains. Dans cette publication il est aussi décrit de combiner la visibilité de la main et de l'image virtuelle de l'objet manipulé comme dans le cas précédent mais en masquant ou non certaines parties de la main et ou de l'objet virtuel pour améliorer le réalisme de la représentation suivant que la main est dessous, en partie à l'intérieur, ou dessus l'objet virtuel. L'interaction avec les objets virtuels est suivie par deux caméras.

Ces dispositifs ne permettent cependant pas d'afficher une seconde image ou des informations textuelles colocalisées avec la première image et associées à des moyens de désignation et les moyens de désignation ne peuvent donc être mis en oeuvre que pour agir sur la seule image affichée.

D'autres dispositifs mettent en oeuvre deux écrans, soit pour générer deux images différentes d'un même contexte, comme par exemple dans la demande de brevet EP 2214092 A1, soit pour afficher l'image d'un objet virtuel sur un des écrans et des informations contextuelles sur l'autre écran, comme par exemple dans les demande de brevet WO 2011/044936 A1 et la demande de brevet US 2010/0007602 A1.

Aucun de ces dispositifs ne permet de détecter de points de contact associés à un des deux écrans et ainsi ni de colocaliser les images affichées sur les deux écrans grâce à une lame transparente et semi-réfléchissante agencée entre les deux écrans.

La présente invention a pour objectif d'améliorer le confort d'un opérateur devant manipuler des objets virtuels en lui proposant des moyens ergonomiques et de fonctionnement intuitif dans lequel il conserve une vision directe de ses mains au moyen desquelles il manipule l'objet virtuel. Le système de l'invention est défini dans la revendication indépendante 1.

Ainsi avec ce système de la revendication indépendante 1, l'opérateur du poste de travail observe dans son champ visuel directement les images de l'objet virtuel sur l'écran secondaire, les images et ou textes présentées sur l'écran primaire et ses mains utilisées comme éléments physiques de désignation par contact sur la surface de désignation.

De manière préférée, les moyens optiques sont agencés pour qu'une image affichée sur l'écran secondaire apparaisse, vue par un opérateur utilisant le poste de travail, au dessus de l'écran primaire et de la surface de désignation du dispositif de détection. Ainsi, au moins pour une position moyenne d'observation, tous les points de l'image de l'objet virtuel affichée sur l'écran secondaire coïncident avec des zones de désignation utilisables de la surface de désignation associée à l'écran primaire.

Egalement de manière préférée, le système de l'invention est construit pour que la longueur du chemin optique entre un point d'observation et un point de l'écran secondaire, observé suivant une direction donnée, est inférieure à la longueur du chemin optique entre ledit point d'observation et un point de l'écran primaire, observé suivant une même direction, de sorte que par accommodation visuelle l'opérateur puisse se concentrer sur l'une ou l'autre des images et ou texte affichés sur les deux écrans.

Dans le mode de réalisation de la invention les moyens optiques comportent principalement une lame transparente, semi-réfléchissante sur au moins une de ses faces, agencée entre l'écran secondaire et l'écran primaire de sorte qu'un opérateur du poste de travail visualise des images affichées sur l'écran secondaire par réflexion sur la face semi-réfléchissante de la lame transparente et visualise des images affichées sur l'écran primaire par transparence à travers la lame transparente. L'agencement des angles d'orientation des écrans et de la lame ainsi que des distances entre les écrans et la lame permet de réaliser des postes de travail adaptés à de nombreux besoins sans difficulté technologique particulière et à faible coût de revient.

Pour palier à la possibilité de mouvement de tête de l'opérateur sur le poste de travail et éviter de lui imposer une position fixe de la tête lors de ses manipulations, le système comporte avantageusement un système de détection de la position, dans un repère formant un système de référence du poste de travail, à tout instant du point d'observation depuis lequel l'opérateur utilisant le poste de travail regarde les écrans.

Dans une forme préférée le système comporte également un système d'observation d'images stéréoscopiques lorsque de telles images stéréoscopiques sont affichées sur l'écran secondaire et ou sur l'écran primaire pour améliorer le réalisme des images de l'objet virtuel ou d'autres images affichées.

L'invention concerne également un dispositif pour la manipulation d'au moins un objet virtuel par un opérateur, un tel dispositif comportant des moyens de calcul et un système conforme à l'invention, dans lequel les moyens de calcul génèrent l'image de l'objet virtuel affiché sur l'écran secondaire en fonction d'informations de contacts reçues du dispositif de détection associé à l'écran primaire de sorte que l'opérateur contrôle la représentation de l'objet virtuel par des actions manuelles sur la surface de désignation sensible aux contacts des doigts.

Afin de guider l'opérateur dans ses manipulations et de lui donner à chaque instant des commandes ergonomiques adaptées aux actions possibles, des commandes symboliques sont calculées et affichées sur l'écran primaire pour matérialiser les actions réalisables sur le dispositif de détection pour agir sur la représentation d'un objet virtuel ou d'éléments d'un objet virtuel affichés sur l'écran secondaire.

De préférence, les commandes symboliques sont affichées sur l'écran primaire en fonction de la position apparente pour l'opérateur de l'image de l'objet virtuel, calculée par les moyens de calcul par la mesure de la position du point d'observation transmise aux moyens de calcul, pour conserver les positions relatives apparentes des commandes symboliques par rapport aux objets virtuels auxquels elles se rapportent et ainsi conserver l'aspect naturel et intuitif des commandes.

Pour maintenir la position relative apparente des images de l'objet virtuel sur l'écran secondaire avec les images affichées sur l'écran primaire, en particulier des commandes symboliques, lorsque le point d'observation est déplacé suite à un déplacement de la tête de l'opérateur, les moyens de calcul reçoivent d'un dispositif de mesure du point d'observation la position de ce point d'observation dans le repère du poste de travail, ou bien détermine un point d'observation à partir d'informations ou de mesures transmises depuis le poste de travail, et modifie les positions des images sur les écrans, de préférence seulement la position de l'image de l'objet virtuel sur l'écran secondaire, pour les maintenir aux mêmes positions relatives vues par l'opérateur.

Dans ce cas, de préférence, les moyens de calcul déterminent de l'objet virtuel une image tenant compte du déplacement de la tête qui est susceptible d'en modifier l'apparence, en particulier lorsque l'objet virtuel est représenté en trois dimensions.

Pour présenter tous les avantages du dispositif en matière de manipulation d'un objet virtuel, avantageusement les moyens de calcul génèrent de l'objet virtuel affiché sur l'écran secondaire des images stéréoscopiques, et de préférence de sorte que la perception de relief obtenue positionne l'image de l'objet virtuel observée avec le système de vision stéréoscopique entre l'observateur d'une part et ses mains et l'écran primaire d'autre part.

Pour permettre la visualisation de l'objet virtuel suivant toutes les directions de l'espace par rapport à l'objet virtuel, le dispositif génère sur l'écran secondaire des images obtenues à partir d'une représentation de l'objet virtuel en trois dimensions.

Avantageusement les capacités d'affichage de l'écran primaire sont exploitées pour afficher des informations générales et des menus contextuels permettant à un opérateur d'exécuter des instructions pour la gestion de son activité sur le poste de travail et pour consulter des informations pouvant lui être utiles ou nécessaires, par exemple des informations extraites d'une base de données consultée en temps réel par l'opérateur.

La description détaillée d'un mode de réalisation de l'invention est faite en référence aux figures qui illustrent :
figure 1 : une vue en perspective du système de l'invention incorporé dans un poste de travail pour un opérateur ;
figure 2 : une vue partiellement écorchée du système de la figure 1 ;
figure 3 : un exemple d'objet virtuel observé dans le système ;
figure 4 : un autre exemple d'objet virtuel 3D avec un affichage en relief observé dans le système ;
figure 5 : un schéma de principe d'un dispositif mettant en oeuvre le système.

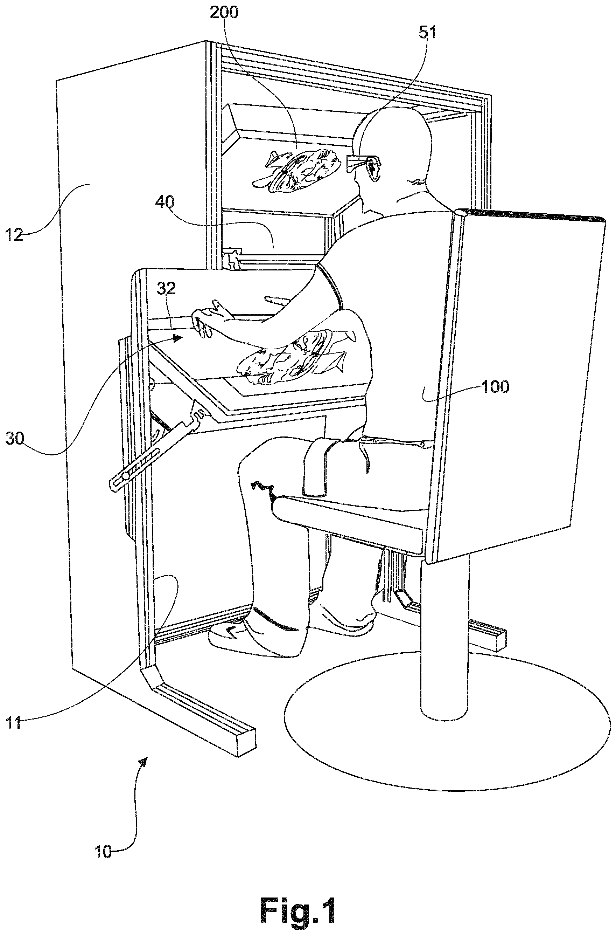

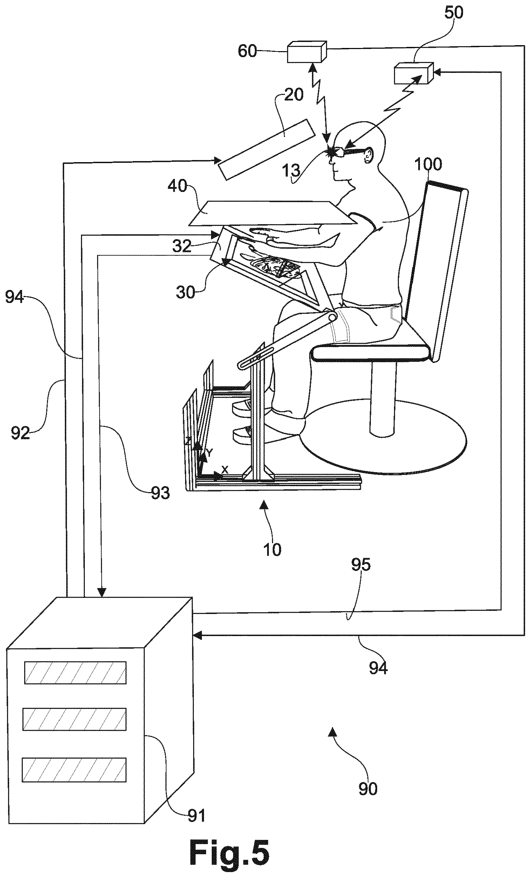

La figure 1 représente un système 10 suivant l'invention pour visualiser un objet virtuel 200, regroupant des interfaces d'affichage et de commande, sous la forme d'un poste de travail pour un opérateur 100 et la figure 5 représente de manière schématique un dispositif 90 pour la manipulation d'objets virtuels comportant le système 10 de la figure 1.

Le système 10 forme une interface du dispositif 90 pour manipuler un ou plusieurs objets virtuels qui peuvent être des objets à deux dimensions ou des objets à trois dimensions.

Le poste de travail de la figure 1 est un exemple non limitatif d'une ergonomie de poste de travail du système 10 et montre un prototype expérimental fonctionnel ayant permis de réaliser l'invention.

Le poste de travail comporte principalement :
- un écran secondaire 20 pour afficher des images d'un objet virtuel sur une surface d'affichage dudit écran secondaire;
- un écran primaire 30, pour afficher des images et ou du texte sur une surface d'affichage dudit écran primaire
- un dispositif de détection de points de contact d'un objet, associé à l'écran primaire 30, pour détecter des positions de contacts de moyens de désignation physiques sur une surface de désignation 32 dudit dispositif de détection ;
- une lame transparente 40, également semi-réfléchissante sur au moins une de ses faces ;
- dans une forme préférée de réalisation, un dispositif 50 de visualisation stéréoscopique pour observer une image affichée pour représenter le point de vue binoculaire d'un opérateur, par exemple au moyen de lunettes à occultations 51 portées par l'opérateur 100 ;
- également dans une forme préférée de réalisation, un système de détermination 60 dans un référentiel ou repère du poste de travail d'une position représentative du point d'observation 13 par l'opérateur 100.

Le poste de travail, dans l'exemple illustré, comporte également des montants 11 et autres structures de support des différents éléments fonctionnels et d'habillages 12 de ces montants et structures afin d'isoler le poste de travail des perturbations ambiantes, et en particulier d'une ambiance lumineuse pouvant gêner la lisibilité des images générées de l'objet virtuel comme il sera bien compris de la description qui va suivre.

L'expression "objet virtuel" est ici à prendre au sens large et il peut s'agir d'une forme unique ou d'un ensemble de formes pouvant être manipulées chacune séparément ou par sous-ensembles ou dans leur ensemble.

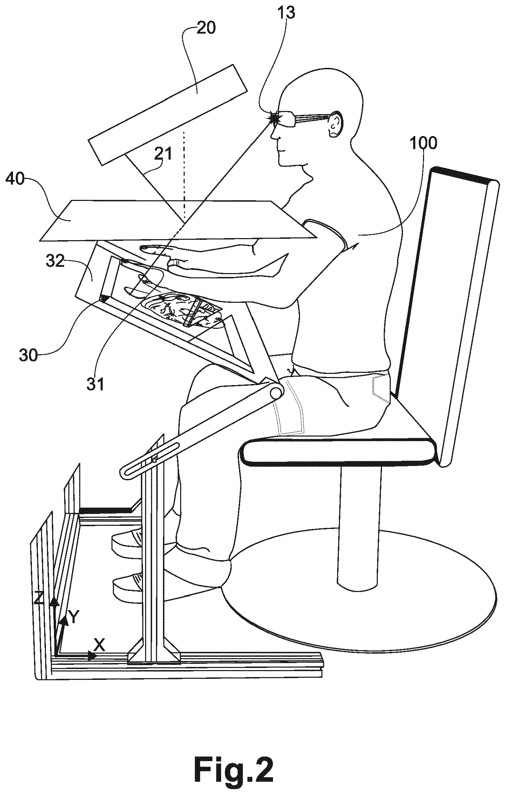

La figure 2 illustre le poste de travail 10 de la figure 1 sans représentation des montants 11 de support et des habillages 12 dudit poste de travail.

Comme il est apparent sur cette figure 2, l'écran secondaire 20, l'écran primaire 30 et la lame transparente 40 sont agencés de telle sorte que la lame transparente est placée entre l'écran secondaire et l'écran primaire et de telle sorte que les surfaces d'affichage des écrans secondaires et primaire sont orientées vers la lame transparente.

En outre les positions et les orientations relatives de ces trois éléments du système 10 sont telles que la surface d'affichage de l'écran secondaire 20, vue par l'opérateur 100 par reflet sur la lame transparente 40 depuis une position moyenne d'un point d'observation 13 du poste de travail 10, coïncide sensiblement dans le champ visuel de l'opérateur avec la surface d'affichage de l'écran primaire 30, vue depuis le même point d'observation au travers de la lame transparente 40.

Par exemple le choix des positions et orientations permets de privilégier un reflet de l'écran 20 parallèle à l'écran 30 pour assurer des déplacements des images parallèles sur les deux surfaces d'affichage 20 et 30 ou de privilégier un volume de visualisation plus important en augmentant l'angle d'orientation de l'écran 20 par rapport à celui de l'écran 30.

Ainsi lorsqu'un observateur 100 est en position sur le poste de travail, chaque point de l'écran secondaire 20, et donc d'une image d'un objet virtuel affichée sur ledit écran secondaire, est observée en superposition avec un point de l'écran primaire 30 suivant une relation biunivoque.

Cette superposition apparente, conforme aux lois de l'optique géométrique, est illustrée par la représentation d'un trajet optique « écran d'affichage-point d'observation » 21 qui subit une réflexion sur la lame transparente 40 et d'un trajet optique « écran primaire-point d'observation » 31 qui traverse la lame transparente 40, trajets optiques dont le trajet commun entre la lame transparente et le point d'observation 13 détermine la direction commune dans laquelle sont observés les deux points.

En outre comme l'illustrent les figures 1 et 2, la surface de désignation 32 est placée par rapport à une station de l'opérateur 100, avantageusement une station assise pour des raisons de fatigue lorsque ledit opérateur doit réaliser un travail de longue durée, de sorte que l'opérateur puisse poser un ou plusieurs doigts, utilisés comme moyens de désignation physique, sur ladite surface de désignation associé à l'écran primaire 30 et la lame transparente 40 est placée de telle sorte que l'opérateur observe ses mains sur la surface de désignation 32 et l'écran primaire 30 au travers de la lame transparente 40.

Pour un opérateur en position assise conventionnelle, la disposition obtenue correspond donc du bas vers le haut à l'écran primaire 30, la surface de désignation 32 superposée à la surface d'affichage, puis la lame transparente 40 et enfin l'écran secondaire 20 dont la surface d'affichage est orientée principalement vers le bas.

La surface d'affichage de l'écran primaire 30 est orientée principalement vers le haut, mais de préférence inclinée de sorte qu'une normale à ladite surface d'affichage au centre dudit écran primaire détermine la direction du point d'observation 13 de sorte à présenter pour l'opérateur une visibilité optimale de l'écran primaire 30.

Suivant cette disposition des éléments du dispositif, l'effet obtenu pour l'opérateur est une vision directe de ses mains 101 au travers de la lame transparente 40, ses mains étant superposées à la surface de détection 32 et à l'écran primaire 30 dont les images affichées sur ledit écran primaire sont placées sous ses mains, et une vision simultanée et colocalisée des images de l'objet virtuel affichées sur l'écran secondaire 20, au-dessus de ses mains, réfléchies par la lame transparente 40, ce qui évite que les mains de l'opérateur lui masquent les images qui sont sur ce dit écran secondaire.

L'écran secondaire, l'écran primaire, la surface de désignation et la lame transparente sont de technologies conventionnelles.

Ainsi l'écran secondaire 20 est avantageusement un écran conventionnel pour l'affichage d'images générées par un dispositif électronique par exemple un écran vidéo ou un écran informatique, à technologie à cristaux liquides ou à plasma par exemple, et produisant des images d'une luminosité suffisante pour être observée en réflexion sur la lame transparente.

La lame transparente 40 est par exemple une lame réalisée dans un verre de qualité optique et d'un indice de réfraction ou d'un traitement lui procurant des qualités de réflexion sur au moins une de ses faces tournée en direction de l'écran secondaire, pour les angles d'incidence considérés, nécessaires à une bonne visibilité de l'écran secondaire 20, sans générer d'atténuation excessive des objets et images observées par transparence.

L'écran primaire 30 est un écran pour l'affichage d'images dont la technologie peut être similaire à celle de l'écran secondaire et associé à un dispositif de détection des points de contact sur la surface de désignation 32. Dans une forme de réalisation du dispositif de détection des points de contact, la surface de désignation 32 est placée sensiblement sur la face de l'écran primaire 30 sur laquelle une image et ou du texte peut être affiché pour former un écran tactile.

De tels écrans tactiles, qui permettent de corréler une zone de contact et une représentation sur un écran, sont aujourd'hui largement utilisés et font appel pour la surface de désignation suivant les modèles à différentes technologies (résistifs, capacitifs, infrarouge ...).

Avantageusement l'écran tactile appartient à un modèle à détection simultanée de contacts multiples, dit "multi touch", qui est en mesure de détecter et de caractériser la présence sur la surface de détection de l'écran tactile de deux ou plusieurs contacts d'objets, comme par exemple plusieurs doigts d'un opérateur.

Le système 10 est, pour sa mise en oeuvre, incorporé dans un dispositif 90 de manipulation d'objets virtuels qui comporte en outre des moyens de calcul 91 pour générer au moins une représentation virtuelle d'un objet, pour produire une image de l'objet et transmettre 92 cette image à l'écran secondaire 20, pour acquérir du dispositif de détection les informations de contacts 93 sur la surface de désignation 32 de l'écran primaire et pour traiter ces contacts devant être interprétés comme des commandes et également pour générer et afficher des informations 94 sous formes d'images et ou de texte sur l'écran primaire 30.

Les moyens de calcul 91 sont des moyens connus non détaillés ici comportant des processeurs, mémoires et interfaces de gestion, de préférence orientés pour les calculs d'images en temps réel, et sont programmés pour effectuer des traitements fonction de l'application à laquelle est dédié le dispositif.

La transformation d'objet sous forme numérique, généralement désignés objets virtuels, et les algorithmes mis en oeuvre pour ces transformations sont aujourd'hui connues dans de nombreuses applications et ils ne seront pas détaillés ici en tant que tels.

Des lois de l'optique géométrique déjà évoquées, il apparaît que, dans le système 10 décrit, chaque point de l'écran secondaire 20 coïncide pour un observateur à un point d'un plan de l'écran primaire 30. Toutefois cette coïncidence établie pour une position du point d'observation 13 est différente si le point d'observation est modifié. Ceci a pour conséquence, lorsque l'opérateur déplace son point d'observation 13 en déplaçant la tête, toute chose inchangées par ailleurs, que des images affichées de manière fixe sur l'écran secondaire d'une part et sur l'écran primaire d'autre part se déplacent visuellement les unes par rapport aux autres.

Pour éviter cet effet, une première solution consiste à maintenir la tête de l'opérateur 100 à une position fixe imposée dans le repère du poste de travail. Cette solution est cependant contraignante et dans une solution plus ergonomique préférée il est mis en oeuvre un système de détermination 60 de la position du point d'observation dans un système d'axe utilisé comme repère du poste de travail.

Un tel système de détermination comporte par exemple des capteurs qui permettent de calculer à partir de mesures dans le repère du poste de travail une position à chaque instant du point d'observation duquel l'opérateur observe les écrans. Dans ce cas, la position mesurée du point d'observation est transmise 94 aux moyens de calcul 91 qui génèrent les images affichées et qui modifie l'emplacement de l'objet virtuel sur l'écran secondaire 20 et ou des éléments affichés sur l'écran primaire 30 de sorte que la position relative des images affichées sur ces deux écrans apparaissent immobiles entre elles lorsque l'opérateur 100 bouge la tête et donc déplace son point d'observation, au moins pour les éléments dont le maintien de la position relative est recherchée.

En pratique il sera préféré de ne déplacer que l'image de l'objet virtuel sur l'écran secondaire 20. En effet les doigts de l'opérateur 100 utilisés comme système de pointage physique sur la surface de désignation 32 réalisent les commandes appliquées à l'objet virtuel 200 en fonction de représentations graphiques sur l'écran primaire et, toutes choses fixes par ailleurs, il n'est pas souhaitable que les représentations graphiques sur l'écran primaire 30 se déplace dans ce cas.

Deux exemples d'application sont détaillés ci-après pour illustrer des utilisations du dispositif.

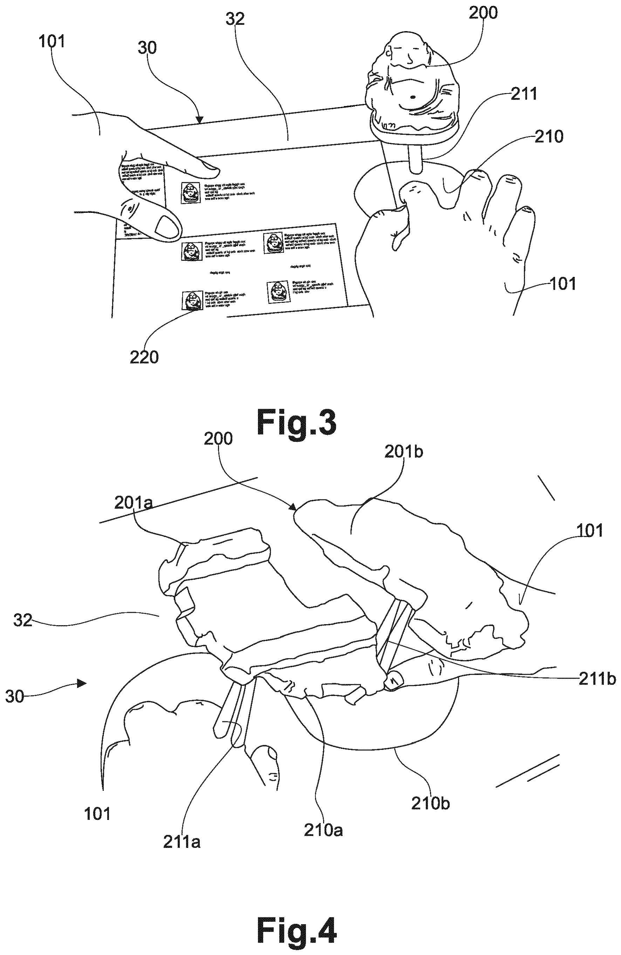

La figure 3 montre la perception visuelle d'un observateur au niveau du poste de travail.

Dans le cas illustré l'objet virtuel 200 est une statuette en trois dimensions dont l'image, générée par le dispositif 90 pour la manipulation d'objet virtuel, apparaît en superposition au-dessus de l'écran primaire 30 et des mains 101 de l'opérateur. La statuette virtuelle est par exemple obtenue en réalisant une représentation numérique d'une statuette réelle qui peut être par exemple un objet fragile que l'on souhaite soumettre au minimum de manipulations ultérieures.

Simultanément à l'affichage de la statuette en trois dimensions sur l'écran secondaire 20 et observée sur la figure 3 par réflexion sur la lame transparente 40, des informations sont affichées sur l'écran primaire 30, informations observées au travers de la lame transparente 40.

Dans l'exemple de la figure 3 deux types d'informations sont affichés en relation avec l'objet virtuel 200. D'une part des informations de commandes 210 correspondant à des commandes pour manipuler l'objet virtuel 200, ici la statuette virtuelle, c'est-à-dire déplacer la statuette, modifier l'orientation de la statuette dans l'espace et grossir ou diminuer les dimensions apparentes de la statuette (effet de zoom). D'autre part des informations générales 220 que l'observateur peut être amené à consulter.

Les informations de commandes 210 sont présentées sous la forme d'objets symboliques sur lesquels l'opérateur 100 agit avec ses doigts par des contacts avec la surface de désignation 32 superposée à l'écran primaire 30. Ces objets symboliques représentent par exemple les différents axes de déplacement de l'objet et de rotation de l'objet. Ces objets symboliques affichés sur l'écran primaire 30 se déplacent pour suivre les mouvements apparents de l'objet virtuel 200, lorsque celui-ci est transformé par les action de l'opérateur, et sont dans le cas illustré présentés reliés à l'objet virtuel par un lien symbolique 211 ayant la forme d'un barreau virtuel qui est généré avec l'objet virtuel et affiché sur l'écran secondaire 20.

Dans l'exemple illustré, les informations générales 220 sont des informations d'une base de données, locale ou accessible à distance par un réseau internet ou autre, sur les statuettes du style de la statuette représentée par l'objet virtuel 200 de sorte que l'opérateur peut naviguer, avantageusement par l'intermédiaire des fonctions tactiles du dispositif de détection associé à l'écran primaire, dans la base de données et comparer en temps réel la statuette, sous tous ses aspects en orientant celle-ci dans l'espace comme il le souhaite et en grossissant les détails qu'il souhaite examiner, aux informations disponibles dans la base de données.

Ainsi lorsque l'opérateur utilise le dispositif 90 de manipulation d'objets virtuels, il génère des instructions par l'intermédiaire du dispositif de détection associé à l'écran primaire 30 sur lequel ses mains 101 sont superposées, ce qui correspond au fonctionnement conventionnel d'un écran tactile, et lui permet de réaliser les commandes de manière directe et intuitive sans nécessité d'utiliser un pointeur virtuel, mais sans que ces mains 101 ne gênent l'observation de l'objet virtuel 200 dont l'image est superposée à ses mains.

On notera ici que les mains sont potentiellement visibles au travers de l'image de l'objet virtuel et que la visibilité des mains se trouve plus ou moins atténuée en fonction de paramètres contrôlés à la conception du poste de travail, comme par exemple des coefficients de transmission et de réflexion de la lame transparente, et de paramètres fixés ou contrôlés lors de l'utilisation du poste de travail, pour autant que des commandes de réglages soient prévues, comme la luminosité et la densité des images de l'objet virtuel affiché sur l'écran secondaire 20 et des conditions d'éclairement des mains.

Dans une forme préférée de réalisation, les distances optiques entre le point d'observation 13 et l'écran secondaire 20 d'une part et le point d'observation 13 et l'écran primaire 30 d'autre part sont, par construction géométrique, différentes de sorte que l'opérateur accommode sa vision pour regarder soit l'objet virtuel 200 soit les informations affichées sur l'écran primaire 30. Cet agencement du dispositif permet à l'opérateur de se concentrer sur les éléments de l'un ou l'autre des écrans, par exemple sur l'objet virtuel, sans être perturbé par les éléments affichés sur l'écran primaire n'attirant pas son intérêt à un moment donné tout en permettant des « commutations » rapides d'un écran à l'autre par simple accommodation visuelle.

Dans le cas illustré sur la figure 4, l'objet virtuel 200 est formé de deux éléments distincts 201a, 201b en trois dimensions, les dits deux éléments étant ici les représentations virtuelles de deux fragments d'un même objet réel et présentant un trait de fracture plus ou moins endommagé, situation qui est souvent rencontrée dans le domaine de l'archéologie.

Dans cet exemple pour lequel la perception du relief est active, l'objet virtuel 200 est affiché en mode stéréoscopique pour être observé avec un effet de relief au moyen de lunettes d'observation 51 associées à un dispositif 50 de visualisation stéréoscopique synchronisé 95 avec les images affichées générées par les moyens de calcul 91. Ce type d'affichage stéréoscopique permettant une vision en relief est bien connu et consiste à produire sur l'écran secondaire 20 une image différente pour chacun des yeux d'un observateur en prenant en compte les différences liées aux points de vue de chaque oeil et à présenter à chaque oeil l'image qui correspond à son point de vue par des lunettes à occultations comme illustré sur la figure 5 ou par d'autres moyens comme par exemple des filtres colorés.

Pour cette raison la représentation de la figure 4, issue d'une photographie, fait apparaître les deux images « oeil droit » et « oeil gauche » superposées et donc avec un dédoublement de certaines parties de l'image, par exemple très marqué sur les liens symboliques 211a, 211b qui associent chaque élément 201a, respectivement 201b, de l'objet virtuel 200 aux éléments symboliques des informations de commande 210a, respectivement 210b, affichés sur l'écran primaire 30.

Dans cet exemple d'application, l'opérateur peut sélectionner par un menu de choix, non visible sur la figure 4, sur l'écran primaire l'un et ou l'autre des éléments 201a, 201b de l'objet pour manipuler dans l'espace virtuel l'objet en trois dimensions en bénéficiant de la vision du relief, l'objectif étant ici de reconstituer l'objet brisé et de vérifier la qualité de la reconstruction virtuelle.

Dans ce cas de visualisation en relief, la distance de perception de l'objet virtuel introduite par l'effet stéréoscopique est choisie de préférence pour que l'utilisateur 100 perçoive l'objet virtuel 200 comme si ledit objet visualisé flottait au-dessus de l'écran primaire 30 et de ses mains 101.

Le système 10 et le dispositif 90 pour la manipulation d'objets virtuels sont en mesure de prendre des formes diverses sans se démarquer de la présente invention, par exemple pour répondre à des objectifs d'ergonomie d'un poste de travail différents de ceux du poste de travail décrit de manière détaillée ou pour réaliser sur des objets virtuels des opérations différentes de celles décrites pour des cas simples à titre d'exemples.

Par exemple le système 10 peut comporter plus d'un écran secondaire et ou plus d'un écran primaire ou encore comporter des commandes physiques visibles par l'opérateur au travers de la lame transparente.

En outre la lame transparente n'est qu'un exemple de moyens optiques pour la visualisation simultanées dans le champ visuel d'un opérateur du poste de travail d'images affichées sur l'écran secondaire et sur l'écran primaire, et d'autres systèmes optiques par exemple utilisant des fibres optiques ou des miroirs et produisant le même effet peuvent être mis en oeuvre.

Le dispositif et le système de l'invention permettent donc de manipuler un ou plusieurs objets virtuels, en deux ou en trois dimensions, de manière parfaitement naturelle pour un opérateur en agissant manuellement sur des commandes au plus près de l'objet virtuel, en conservant dans le champs visuel de l'opérateur ses mains et l'objet virtuel manipulé, sans toutefois que les mains ne masquent l'objet, et le cas échéant des informations complémentaires utiles à l'opérateur.

Le dispositif et le système de l'invention sont avantageusement mis en oeuvre comme moyen d'assistance dans de nombreux domaines dans lesquels il est utile de manipuler des objets mais où il n'est pas toujours possible ou souhaitable de réaliser ces manipulations sur des objets réels en raison de leurs dimensions, de leurs fragilités, de leurs masses, de leur dangerosité ...

Outre le domaine de l'archéologie ou des antiquités correspondant aux exemples détaillés, ces situations se trouvent par exemple dans le domaine de la médecine, de l'architecture, de l'industrie nucléaire...

## Revendications

1. Système (10) pour visualiser au moins un objet virtuel (200) comportant :
- un écran secondaire (20) d'affichage d'images de l'objet virtuel (200) ;
- un écran primaire (30) d'affichage d'images et ou de texte ;
- un dispositif de détection associé à l'écran primaire (30), de détection de points de contacts d'un ou plusieurs éléments physiques de désignation sur une surface de désignation (32) dudit dispositif de détection ;
- des moyens optiques de visualisation simultanée et colocalisée assurant une vision des images affichées sur l'écran secondaire (20) et des images affichées sur l'écran primaire (30); et,
une structure support d'un poste de travail sur laquelle structure support sont fixés :
l'écran primaire (30) ;
l'écran secondaire (20) ;
les moyens optiques de visualisation comportant une lame transparente (40) et semi-réfléchissante agencée sur ladite structure support entre l'écran secondaire (20) et l'écran primaire (30) pour assurer la visualisation simultanée et colocalisée, par un opérateur (100) du poste de travail, d'images de l'objet virtuel (200) affichées sur l'écran secondaire (20) et d'images et ou du texte affichés sur l'écran primaire (30), ladite lame transparente étant placée sur ladite structure support et orientée de sorte que ledit opérateur visualise depuis une position moyenne d'un point d'observation (13) des images de l'objet virtuel (200) affichées sur l'écran secondaire (20) par réflexion sur une face de la lame transparente (40) et visualise des images et ou du texte affichés sur l'écran primaire (30) par transparence à travers la lame transparente (40) ;
le dispositif de détection avec la surface de désignation (32) étant située entre l'écran secondaire (20) et l'écran primaire (30), et pour être vue par l'opérateur au travers de la lame transparente (40).

2. Système suivant la revendication 1 dans lequel une image d'objet virtuel (200) affichée sur l'écran secondaire (20) apparaît visuellement, pour un opérateur (100) utilisant le poste de travail, superposée à l'écran primaire (30).

3. Système suivant la revendication 2 dans lequel un chemin optique entre un point d'observation (13) et un point de l'écran secondaire (20) observé suivant une direction donnée est d'une longueur inférieure à la longueur d'un chemin optique entre ledit point d'observation et un point de l'écran primaire (30) observé suivant une même direction.

4. Système suivant l'une des revendications précédentes comportant un système de détermination (60) d'une position, dans un repère du poste de travail, d'un point d'observation (13) d'un opérateur (100) utilisant le poste de travail.

5. Système suivant l'une des revendications précédentes comportant un ou plusieurs systèmes d'observation (50) d'images stéréoscopiques lorsque de telles images stéréoscopiques sont affichées sur l'écran secondaire (20) et ou sur l'écran primaire (30).

6. Dispositif (90) pour la manipulation d'au moins un objet virtuel par un opérateur (100) comportant des moyens de calcul (91) et un système (10) conforme à l'une des revendications précédentes dans lequel dispositif les moyens de calcul (91) génèrent l'image de l'objet virtuel (200) affiché sur l'écran secondaire (20) en fonction d'informations de contacts reçues du dispositif de détection associé à l'écran primaire (30).

7. Dispositif (90) pour la manipulation d'au moins un objet virtuel suivant la revendication 6 dans lequel des commandes symboliques (210, 210a, 210b) sont calculées et affichées sur l'écran primaire (30) pour matérialiser les actions réalisables sur le dispositif de détection pour agir sur la représentation d'un objet virtuel (200) ou d'éléments (201a, 201b) d'un objet virtuel affichés sur l'écran secondaire (20).

8. Dispositif (90) pour la manipulation d'au moins un objet virtuel suivant la revendication 7 dans lequel les commandes symboliques (210, 210a, 210b) sont affichées sur l'écran primaire (30) en fonction de la position apparente pour l'opérateur (100) de l'image de l'objet virtuel (200) pour conserver les positions relatives apparentes des dites commandes symboliques par rapport à l'objet virtuel auquel elles se rapportent.

9. Dispositif pour la manipulation d'au moins un objet virtuel suivant la revendication 8 en combinaison avec la revendication 4 dans lequel une ou des images de l'objet virtuel (200) affichées sur l'écran secondaire (20) et une ou des images affichées sur l'écran primaire (30) sont déplacées relativement les unes par rapport aux autres en fonction d'une position mesurée ou calculée du point d'observation (13) pour conserver les mêmes positions relatives entre les dites images vues par l'opérateur (100).

10. Dispositif pour la manipulation d'au moins un objet virtuel suivant l'une des revendications 6 à 9 dans lequel ledit dispositif génère d'un objet virtuel (200) affiché sur l'écran secondaire (20) des images stéréoscopiques.

11. Dispositif pour la manipulation d'au moins un objet virtuel suivant la revendication 10 dans lequel les images stéréoscopiques sont générées de sorte que l'objet virtuel (200), observé à l'aide d'un système (50) d'observation d'images stéréoscopiques, apparaisse à l'opérateur (100) en avant de ses mains et des images de l'écran primaire.

12. Dispositif pour la manipulation d'au moins un objet virtuel suivant l'une des revendications 6 à 11 dans lequel ledit dispositif génère d'un objet virtuel (200) affiché sur l'écran secondaire (20) des images obtenue à partir d'une représentation en trois dimensions.

13. Dispositif pour la manipulation d'au moins un objet virtuel suivant l'une des revendications 6 à 12 dans lequel ledit dispositif affiche sur l'écran primaire (30) des informations extraites de bases de données.

## Patentansprüche

1. System (10) zur Visualisierung von mindestens einem virtuellen Objekt (200), umfassend:
- einen sekundären Bildschirm (20) zum Anzeigen von Bildern des virtuellen Objekts (200);
- einen primären Bildschirm (30) zum Anzeigen von Bildern und oder von Text;
- eine dem primären Bildschirm (30) zugeordnete Erfassungsvorrichtung zum Erfassen von Berührungspunkten eines oder mehrerer physischer Bezeichnungselemente auf einer Bezeichnungsfläche (32) der Erfassungsvorrichtung;
- optische Mittel zur gleichzeitigen und kollokierten Visualisierung, die ein Sehen der auf dem sekundären Bildschirm (20) angezeigten Bilder und der auf dem primären Bildschirm (30) angezeigten Bilder sicherstellen; und
eine Tragstruktur einer Arbeitsstation, auf welcher Tragstruktur befestigt sind:
der primäre Bildschirm (30);
der sekundäre Bildschirm (20);
die optischen Visualisierungsmittel, die eine transparente und halbreflektierende Scheibe (40) umfassen, die an der Tragstruktur zwischen dem sekundären Bildschirm (20) und dem primären Bildschirm (30) angeordnet ist, um die gleichzeitige und kollokierte Visualisierung von Bildern des virtuellen Objekts (200), die auf dem sekundären Bildschirm (20) angezeigt werden, und von Bildern und oder von Text, die auf dem primären Bildschirm (30) angezeigt werden, durch einen Bediener (100) der Arbeitsstation sicherzustellen, wobei die transparente Scheibe so an der Tragstruktur platziert und ausgerichtet ist, dass der Bediener von einer mittleren Position eines Beobachtungspunkts (13) aus Bilder des virtuellen Objekts (200), die auf dem sekundären Bildschirm (20) angezeigt werden, durch Reflexion auf einer Seite der transparenten Scheibe (40) visualisiert, und Bilder und oder Text, die auf dem primären Bildschirm (30) angezeigt werden, durch Transparenz durch die transparente Scheibe (40) hindurch visualisiert;
wobei die Erfassungsvorrichtung mit der Bezeichnungsfläche (32) zwischen dem sekundären Bildschirm (20) und dem primären Bildschirm (30) liegt, und um vom Bediener durch die transparente Scheibe (40) hindurch gesehen zu werden.

2. System nach Anspruch 1, wobei ein Bild eines virtuellen Objekts (200), das auf dem sekundären Bildschirm (20) angezeigt wird, für einen Bediener (100), der die Arbeitsstation verwendet, visuell dem primären Bildschirm (30) überlagert erscheint.

3. System nach Anspruch 2, wobei ein optischer Pfad zwischen einem Beobachtungspunkt (13) und einem beobachteten Punkt des sekundären Bildschirms (20) entlang einer gegebenen Richtung von einer geringeren Länge ist als die Länge eines optischen Pfades zwischen dem Beobachtungspunkt und einem beobachteten Punkt des primären Bildschirms (30) entlang ein und derselben Richtung.

4. System nach einem der vorstehenden Ansprüche, das ein System zum Bestimmen (60) einer Position, in einem Bezugssystem der Arbeitsstation, eines Beobachtungspunkts (13) eines Bedieners (100), der die Arbeitsstation verwendet, umfasst.

5. System nach einem der vorstehenden Ansprüche, das ein oder mehrere Systeme zum Beobachten (50) von stereoskopischen Bildern umfasst, wenn solche stereoskopischen Bilder auf dem sekundären Bildschirm (20) und oder auf dem primären Bildschirm (30) angezeigt werden.

6. Vorrichtung (90) zur Handhabung von mindestens einem virtuellen Objekt durch einen Bediener (100), die Rechenmittel (91) und ein System (10) gemäß einem der vorstehenden Ansprüche umfasst, in welcher Vorrichtung die Rechenmittel (91) das Bild des virtuellen Objekts (200), das auf dem sekundären Bildschirm (20) angezeigt wird, in Abhängigkeit von Berührungsinformationen, die von der dem primären Bildschirm (30) zugeordneten Erfassungsvorrichtung empfangen werden, erzeugen.

7. Vorrichtung (90) zur Handhabung von mindestens einem virtuellen Objekt nach Anspruch 6, wobei symbolische Befehle (210, 210a, 210b) berechnet und auf dem primären Bildschirm (30) angezeigt werden, um die Aktionen, die an der Erfassungsvorrichtung ausführbar sind, zu verwirklichen, um auf die Darstellung eines virtuellen Objekts (200) oder von Elementen (201a, 201b) eines virtuellen Objekts, die auf dem sekundären Bildschirm (20) angezeigt werden, einzuwirken.

8. Vorrichtung (90) zur Handhabung von mindestens einem virtuellen Objekt nach Anspruch 7, wobei die symbolischen Befehle (210, 210a, 210b) in Abhängigkeit von der scheinbaren Position des Bildes des virtuellen Objekts (200) für den Bediener (100) auf dem primären Bildschirm (30) angezeigt werden, um die scheinbaren relativen Positionen der symbolischen Befehle in Bezug auf das virtuelle Objekt, auf das sie sich beziehen, zu bewahren.

9. Vorrichtung zur Handhabung von mindestens einem virtuellen Objekt nach Anspruch 8 in Kombination mit Anspruch 4, wobei ein oder mehrere Bilder des virtuellen Objekts (200), die auf dem sekundären Bildschirm (20) angezeigt werden, und ein oder mehrere Bilder, die auf dem primären Bildschirm (30) angezeigt werden, in Abhängigkeit von einer gemessenen oder berechneten Position des Beobachtungspunkts (13) relativ zueinander verschoben sind, um dieselben relativen Positionen zwischen den Bildern, die vom Bediener (100) gesehen werden, zu bewahren.

10. Vorrichtung zur Handhabung von mindestens einem virtuellen Objekt nach einem der Ansprüche 6 bis 9, wobei die Vorrichtung aus einem virtuellen Objekt (200), das auf dem sekundären Bildschirm (20) angezeigt wird, stereoskopische Bilder erzeugt.

11. Vorrichtung zur Handhabung von mindestens einem virtuellen Objekt nach Anspruch 10, wobei die stereoskopischen Bilder so erzeugt werden, dass das virtuelle Objekt (200), mithilfe eines Systems (50) zum Beobachten von stereoskopischen Bildern beobachtet, dem Bediener (100) vor seinen Händen und den Bildern des primären Bildschirms erscheint.

12. Vorrichtung zur Handhabung von mindestens einem virtuellen Objekt nach einem der Ansprüche 6 bis 11, wobei die Vorrichtung aus einem virtuellen Objekt (200), das auf dem sekundären Bildschirm (20) angezeigt wird, Bilder erzeugt, die anhand einer dreidimensionalen Darstellung erhalten werden.

13. Vorrichtung zur Handhabung von mindestens einem virtuellen Objekt nach einem der Ansprüche 6 bis 12, wobei die Vorrichtung auf dem primären Bildschirm (30) Informationen anzeigt, die aus Datenbanken extrahiert werden.

## Claims

1. System (10) for displaying at least one virtual object (200) comprising:
- a secondary screen (20) for the display of images of the virtual object (200);
- a primary screen (30) for the display of images and or text;
- a detection device associated with the primary screen (30) for the detection of contact points of one or several physical designation elements on a designation surface (32) of said detection device;
- optical means for simultaneous and colocated display providing a view of images displayed on the secondary screen (20) and images displayed on the primary screen (30); and
a work station support structure, on which support structure are fixed:
the primary screen (30);
the secondary screen (20);
the optical display means comprising a transparent and semi-reflecting panel (40), arranged on said support structure between the secondary screen (20) and the primary screen (30), for the simultaneous and colocated display by a work station operator (100) of images of the virtual object (200) displayed on the secondary screen (20) and images and or text displayed on the primary screen (30), said transparent panel being placed on said support structure and being oriented such that said operator views from an average position of an observation point (13) images of the virtual object (200) displayed on the secondary screen (20) by reflection on a face of the transparent panel (40) and views images and or text displayed on the primary screen (30) by transparency through the transparent panel (40);
the detection device with the designation surface (32) being located between the secondary screen (20) and the primary screen (30) and to be seen by the operator through the transparent panel (40).

2. System according to claim 1 wherein an image of the virtual object (200) displayed on the secondary screen (20) appears visually, for an operator (100) using the work station, superimposed on the primary screen (30).

3. System according to claim 2 wherein a length of an optical path between an observation point (13) and a point on the secondary screen (20) observed along a given direction is less than the length of an optical path between said observation point and a point on the primary screen (30) observed along the same direction.

4. System according to one of the preceding claims comprising a system (60) for determination of a position, in a coordinate system of the work station, of an observation point (13) of an operator (100) using the work station.

5. System according to one of the preceding claims comprising one or more systems (50) for the observation of stereoscopic images when such stereoscopic images are displayed on the secondary screen (20) and or on the primary screen (30).

6. Device (90) for the manipulation of at least one virtual object by an operator (100) comprising calculation means (91) and a system (10) conforming with one of the previous claims in which device the calculation means (91) generate the image of the virtual object (200) displayed on the secondary screen (20) as a function of contact information received from the detection device associated with the primary screen (30).

7. Device (90) for the manipulation of at least one virtual object according to claim 6 wherein symbolic commands (210, 210a, 210b) are calculated and displayed on the primary screen (30) to materialise actions that can be performed on the detection device to take action on the representation of a virtual object (200) or elements (201a, 201b) of a virtual object displayed on the secondary screen (20) .

8. Device (90) for the manipulation of at least one virtual object according to claim 7 wherein the symbolic commands (210, 210a, 210b) are displayed on the primary screen (30) as a function of the apparent position for the operator (100) of the image of the virtual object (200) to keep the apparent relative positions of said symbolic commands relative to the virtual object to which they are related.

9. Device for the manipulation of at least one virtual object according to claim 8 in combination with claim 4, wherein one or more images of the virtual object (200) displayed on the secondary screen (20) and one or more of the images displayed on the primary screen (30) are displaced relative to each other as a function of a measured or calculated position of the observation point (13) to keep the same relative positions between said images seen by the operator (100).

10. Device for the manipulation of at least one virtual object according to one of claims 6 to 9 wherein said device generates from a virtual object (200) displayed on the secondary screen (20) stereoscopic images.

11. Device for the manipulation of at least one virtual object according to claim 10 wherein the stereoscopic images are generated such that the virtual object (200), observed using a stereoscopic images observation system (50), appears to the operator (100) in front of his hands and images on the primary screen.

12. Device for the manipulation of at least one virtual object according to one of claims 6 to 11 wherein said device generates from a virtual object (200) displayed on the secondary screen (20) images obtained from a three-dimensional representation.

13. Device for the manipulation of at least one virtual object according to one of claims 6 to 12 wherein said device displays on the primary screen (30) information extracted from databases.
